# EUROPEAN PATENT APPLICATION

(11) **EP 4 653 219 A1**
(43) Date of publication of application: **26.11.2025**
(21) Application number: 25176297.7
(22) Date of filing: 14.05.2025
(51) Int. Cl.: B60K 1/04, B62D 25/20, B62D 25/02, B62D 21/15

(54) **LOWER STRUCTURE OF VEHICLE**

(30) Priority: 22.05.2024 JP 2024083020
(71) Applicant: MAZDA MOTOR CORPORATION, Hiroshima 730-8670 (JP)
(72) Inventor: Kamemoto, Eiji, Aki-gun, Hiroshima, 730-8670 (JP); Natsume, Hirotaka, Aki-gun, Hiroshima, 730-8670 (JP); Tsukamoto, Hideyuki, Aki-gun, Hiroshima, 730-8670 (JP)
(74) Representative: Lorenz Seidler Gossel Part. mbB

(57) **Abstract**

A vehicle comprises a pair of side sills, a cross member, a battery, and a reinforcing member. The battery is arranged below the cross member and has a battery frame. The reinforcing member is stored in a hollow portion of the side sill and has a body portion having a closed-cross section. The body portion is arranged in an area which overlaps the cross member in a side view of the vehicle, when viewed from one side of a vehicle width direction. The side sill, the battery frame, and the reinforcing member are fixed by a bolt and a nut. The bolt penetrates a bracket and its tip portion penetrates toward the body portion of the reinforcing member.

## Description

The present invention relates to a lower structure of a vehicle in which a battery is arranged below a floor.

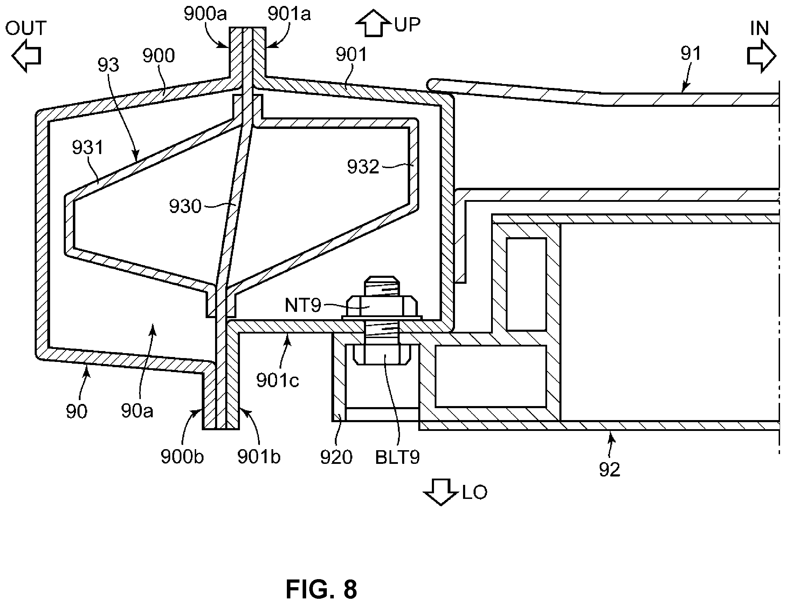

In these days, a battery-type eclectic vehicle (BEV), a hybrid-type electric vehicle, or the like have prevailed considerably. A large-sized battery with a large capacity is installed under a floor in these kinds of vehicles. A battery-installment manner of a vehicle which is disclosed in Japanese Patent Laid-Open Publication No. 2018-131133 will be described referring to FIG. **8****.**

As shown in FIG. **8****,** in the vehicle of the patent document, a battery frame **920** of a battery **92** is fixed to a lower portion of a side sill **90.** Specifically, the side sill **90** is combined by a side sill outer **900** positioned on an outward side, in a vehicle with direction, of a vehicle body and a side sill inner **901** positioned on an inward side, in the vehicle with direction, of the vehicle body, and the battery frame **920** is fixed to a lower wall portion **901c** of the side sill inner **901** by a bolt **BLT9** and a nut **NT.**

A cross member **91** is fixed to the side sill inner **901** of the side sill **90** such that it connects the side sill inner **901** to its opposite-side side sill **90.** The cross member **91** is arranged above the battery **92.**

Further, a stiffener (reinforcing member) **93** is stored in a hollow portion **90a** inside the side sill **90** in the above-described vehicle. The stiffener **93** comprises a flat-plate shaped middle wall member **930** and a hat-section shaped outside member **931** and a hat-section shaped inside member **932.** The stiffener **93** is configured such that its upper edge portion of the middle wall member **930** is interposed between an upper flange portion **900a** of the side sill outer **900** and an upper flange portion **901a** of the side sill inner **901,** and its lower edge portion is interposed between a lower flange portion **900b** of the side sill outer **900** and a lower flange portion **901b** of the side sill inner **901,** and the stiffener **93** is fixed to the side sill **90.**

In the above-described vehicle of the patent document, an inside member **932** of the stiffener **93** is configured such that its inner side is positioned upward.

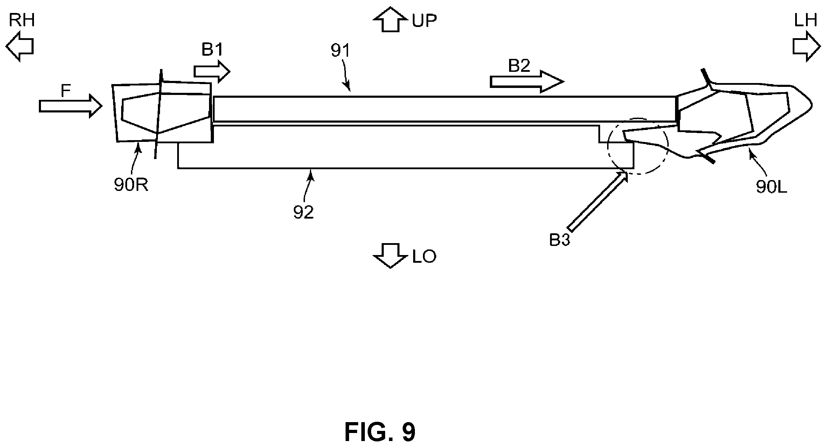

In the structure of the above-described patent document, there is a concern that in a case where a collision load is applied to the side sill **90** which is positioned on one side, in the vehicle width direction, of the vehicle body, fixation of the side sill **90** positioned on the other side and the battery **92** may be released (detached). This will be described referring to FIG. **9.** FIG. **9** shows respective moves of the side sill **90L, 90R,** the cross member **91,** and the battery **92** when a side-collision load **F** is applied to the right-side side sill **90R** from a vehicle right side.

As shown in FIG. **9****,** when the side-collision load **F** is applied to the right-side side sill **90R** from the vehicle right side, the cross member **91** is pressed leftward by the right-side sill **90R** as shown by an arrow **B1.** The pressed cross member **91** moves leftward in accordance with a deformation amount of the right-side side sill **90R** (arrow **B2**). Thereby, the side-collision load **F** is transmitted to the left-side side sill **90L** via the cross member **91.**

Herein, since the battery **92** installed under the floor is large and heavy, it tends to stay there due to its inertia. Thereby, an inverse move (rightward move) of the battery **92** relative to the cross member **91** and the left-side side sill **90L** occurs. Accordingly, as shown by an arrow **B3,** there is a concern that at an opposite side to the side where the side-collision load is applied (i.e., left side), the fixation of the left-side side sill **90L** and the battery **92** may be released because of breakage or the like.

While the case where the side-collision load **F** is applied from the vehicle right side was described above, there is a concern that fixation of the right-side side sill **90R** and the battery **92** may be released when the side-collision load is applied from the vehicle left side.

The present invention has been devised in view of the above-described problem, and an object of the present invention is to provide a lower structure of a vehicle which can properly suppress releasing of the fixation of the side sill and the battery even in a case where the side-collision load is applied to the side sill from the outward side, in the vehicle width direction, of the vehicle body.

The lower structure of the vehicle of the present invention comprises a pair of side sills arranged at both outward sides, in a vehicle width direction, of a floor of the vehicle, extending in a longitudinal direction of the vehicle, and having a closed-cross section with a hollow portion inside, respectively, a cross member extending in the vehicle width direction and fixed to the pair of side sills at both ends thereof, a battery arranged below the cross member under the floor of the vehicle and having a battery frame extending in the longitudinal direction of the vehicle on an inward side, in the vehicle width direction, of each of the pair of side sills, a reinforcing member stored in the hollow portion of each of the pair of side sills, the reinforcing member being configured such that at least part thereof has a closed-cross section and the part thereof having the closed-cross section is arranged in an area which overlaps the cross member in a side view of the vehicle, when viewed from one side of the vehicle width direction, and a fixing member to fix the battery frame of the battery to each of the pair of side sills, wherein the fixing member is configured such that part thereof penetrates the reinforcing member and the fixing member fixes the battery frame to the side sill together with the reinforcing member.

In the vehicle provided with the lower structure according to the present invention, since the part of the reinforcing member having the closed-cross section is arranged in the area which overlaps the cross member in the side view, the side-collision load applied to the side sill from the outward side, in the vehicle width direction, of the vehicle body is efficiently transmitted to the cross member. Further, even at the opposite side to the side where the load is applied, since the reinforcing member is the area which overlaps the cross member in the side view, the load transmitted via the cross member is efficiently transmitted to the side sill via the reinforcing member.

Further, in the vehicle provided with the lower structure according to the present invention, the reinforcing member and the battery frame are fixed to the side sill by the fixing member. Thereby, even in a case where the side-collision load is applied to the side sill from the vehicle outward side, the battery frame moves toward the opposite side to the application side of the load together with the cross member. Accordingly, even in a case where the side-collision load is applied to the one of the side sills, it can be suppressed that the fixation of the other-side side sill which is opposite to the load-application side and the battery is released.

Herein, since the battery installed under the vehicle floor in the electric vehicle or the like has the large capacity and the large size and is heavy, the battery frame is configured to have the high rigidity. Accordingly, it is unlikely that the battery frame where the load is transmitted via the fixing member is greatly deformed and broken compared to the cross member, so that relative move-difference between the cross member and the battery frame may not occur when the side-collision load is applied.

In the vehicle provided with the lower structure according to the present invention, the reinforcing member may comprise a body portion including the part of the reinforcing member having the closed-cross section and a bracket arranged below the body portion, and the fixing member may be configured such that part thereof penetrates the bracket and the fixing member fixes the bracket to the battery frame.

According to this structure, since the body portion of the reinforcing member includes the part of the reinforcing member having the closed-cross section and the bracket of the reinforcing member is fixed by the fixing member, when the side-collision load is applied, the high rigidity of the reinforcing member can be secured and also the firm fixation of the battery frame and the reinforcing member can be attained.

In the vehicle provided with the lower structure according to the present invention, the fixing member may be configured such that part thereof penetrates the body portion.

According to this structure, when the side-collision load is applied to the side sill, the battery frame can be made to move properly toward the opposite side to the load-application side together with cross member.

In the vehicle provided with the lower structure according to the present invention, a portion of the fixing member which penetrates the body portion may have a bar shape, and a portion of the body portion of the reinforcing member where the part of the fixing member penetrates may have an opening with a size which is larger than a sectional size of the bar-shaped portion of the fixing member.

According to this structure, the opening with the above-described size is formed at the body portion of the reinforcing member, and the bar-shaped portion of the fixing member penetrates through the above-described opening. That is, when the side-collision load is not applied to the side sill, the fixing member and the opening of the body portion do not contact each other, so that any contact noises can be suppressed from being generated between the fixing member and an inner peripheral face of the opening in the vehicle traveling. Meanwhile, in a case where the side-collision load is applied to the side sill and thereby the reinforcing member moves according to the deformation or move of the side sill, an outer face of the bar-shaped portion of the fixing member and the inner peripheral face contact each other. Thereby, part of the side-collision load applied to the side sill is transmitted to the battery frame via the fixing member as well, so that the battery frame can be made to move together with the cross member in the vehicle side collision.

In the vehicle provided with the lower structure according to the present invention, the side sill may be fixed to the battery frame in a state where part of an outer wall of the side sill is interposed between the bracket and the battery frame.

According to this structure, the part of the outer wall of the side sill is interposed between the bracket of the reinforcing member and the battery frame, and in this state, the side sill, the reinforcing member, and the battery frame are fixed together by the fixing member. Accordingly, the battery frame can be firmly fixed to the side sill and the reinforcing member. That is, compared to a case where the outer wall of the side sill is fixed in a state where a gap is generated between the bracket of the reinforcing member and the battery frame, when the side-collision load is applied from the vehicle outward side, the cross member and the battery frame do not have the move difference easily due to resistance caused by a face contact of the both. Accordingly, even when the side-collision load is applied to the one of the side sills, it can be further suppressed that the fixation of the other side sill opposite to the load-application side and the battery is released.

In the vehicle provided with the lower structure according to the present invention, the body portion of the reinforcing member may be fixed to the side sill at least one of an inward side and an outward side, in the vehicle width direction, thereof.

According to this structure, since the body portion including the part of the reinforcing member having the closed-cross section is fixed to the side sill, the body portion of the reinforcing member moves toward the vehicle inward side together with the side sill when the side-collision load is applied to the side sill. Thereby, the load transmission is conducted by the body portion of the reinforcing member moving together with the side sill, and the load is properly transmitted to the battery frame via the fixing member.

In the vehicle provided with the lower structure according to the present invention, the bracket may be fixed to the body portion of the reinforcing member.

According to this structure, when the side-collision load is applied to the side sill, the relative move-difference, in the vehicle width direction, between the body portion and the bracket does not occur easily. Thereby, even when the side-collision load is applied to the one of the side sills, it can be further effectively suppressed that the fixation of the other side sill opposite to the load-application side and the battery is released.

In the vehicle provided with the lower structure according to the present invention, at least part of the battery frame may have a closed-cross section, and the fixing member may fix the part of the battery frame having the closed-cross section to the side sill and the reinforcing member.

According to this structure, since the side sill and the reinforcing member are fixed by the part of the battery frame having the closed-cross section, it is suppressed that the battery frame is greatly deformed when the side-collision load is applied to the side sill. Thereby, even when the side-collision load is applied to the one of the side sills, it can be further effectively suppressed that the fixation of the other side sill opposite to the load-application side and the battery is released.

In the vehicle provided with the lower structure according to the present invention, the fixing member may be provided to extend upward, in a vertical direction, of the vehicle toward the reinforcing member from the part of the battery frame having the closed-cross section.

According to this structure, since the fixing member is provided to extend in the vertical direction, the battery is raised upward from a lower position and then the battery frame can be fixed to the side sill and the reinforcing member. That is, any troublesome operations (works) for installing the battery are unnecessary.

Further, when the side-collision load is applied to the side sill, the load can be transmitted to the battery frame via the fixing member extending in the vertical direction.

In the vehicle provided with the lower structure according to the present invention, each of the pair of side sills may comprise a side sill outer provided on the outward side, in the vehicle width direction, thereof and a side sill inner provided on the inward side, in the vehicle width direction, thereof and fixed to the side sill outer, and the battery frame and the reinforcing member may be fixed to the side sill inner by the fixing member.

According to this structure, since the battery frame and the reinforcing member are fixed to the side sill inner, even when the side-collision load is applied to part of the side sill, it can be suppressed that a joint point (by welding or the like) of the side sill inner and the vehicle body, such as a floor panel, is released (detached). That is, the side sill tends to be deformed in a bent shape in the plan view when the side-collision load is applied to the side sill. However, since the side sill and the reinforcing member are fixed to the battery frame having the high rigidity, it can be suppressed that the side sill is deformed in the bent shape by a reaction force from the battery frame. Accordingly, releasing of the joint point of the side sill and the vehicle body due to the application of the side-collision load to the part of the side sill can be suppressed properly.

Thus, the lower structure of the vehicle according to the present invention can properly suppress releasing of the fixation of the side sill and the battery even in a case where the side-collision load is applied to the side sill from the outward side, in the vehicle width direction, of the vehicle body.

The present invention will become apparent from the following description which refers to the accompanying drawings.

### BRIEF DESCRIPTION OF THE DRAWINGS

FIG. **1** is a plan view showing part of a vehicle provided with a lower structure according to an embodiment of the present invention.
FIG. **2** is a sectional view taken along line II-II of FIG. **1****.**
FIG. **3** is a perspective view showing part of a reinforcing member.
FIG. **4** is a perspective view of a bracket.
FIG. **5** is a schematic diagram to explain respective moves of a cross member and a battery in a case where a side-collision load is applied to one of side sills.
FIG. **6** is a sectional view of a lower structure according to a first modification.
FIG. **7** is a sectional view of a lower structure according to a second modification.
FIG. **8** is a sectional view of a lower structure according to the prior art.
FIG. **9** is a schematic diagram to explain respective moves of a cross member and a battery in a case where a side-collision load is applied to a side sill in the lower structure according to the prior art.

Hereafter, an embodiment of the present invention will be described referring to the drawings. The following description merely exemplifies the present invention, and the present invention is not limited to the following description except its substantial structure.

In figures referred to in the following description, "FR" shows a vehicle front (forward) side, "RR" shows a vehicle rear (rearward) side, "LH" shows a vehicle left (leftward) side, "RH" shows a vehicle right (rightward) side, "UP" shows a vehicle upper (upward) side, and "LO" shows a vehicle lower (downward) side.

An embodiment of the invention can be described as follows:

### 1. Structure of Vehicle 1

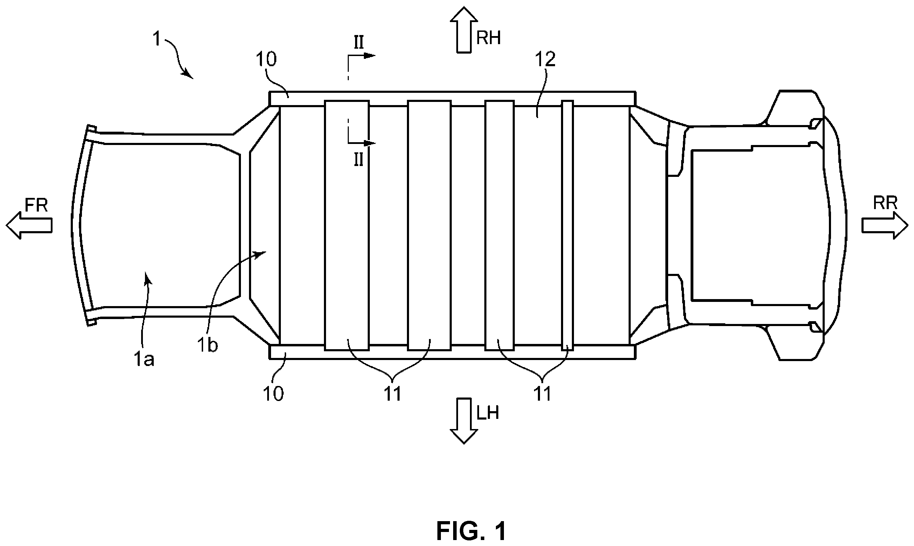

A structure of the vehicle **1** provided with a lower structure according to the present embodiment will be described referring to FIG. **1.** FIG. **1** illustrates part of the vehicle **1** only, and illustrations of a powertrain and so on are omitted here.

As shown in FIG. **1****,** the vehicle **1** comprises a powertrain installment portion **1a** where the powertrain is installed at its front portion and a floor portion **1b** where a passenger stays, which is positioned on a rearward side of the powertrain installment portion **1a.** A pair of side sills **10,** plural cross members **11,** and a battery **12** are arranged.

The pair of side sills **10** are arranged at both sides, in a vehicle width direction, of the floor portion **1b** and extend in a longitudinal direction, respectively. The plural cross members **11** extend in the vehicle width direction, respectively, and fixed to the pair of side sills **10** at their both ends. The battery **12** supplies or receives the power (electric power) to or from the powertrain.

Herein, the battery **12** comprises battery cells which are constituted by lithium-ion battery, a nickel-metal hydride battery, or the like.

### 2. Fixation Structure of Side Sill 10, Cross Member 11, and Battery 12

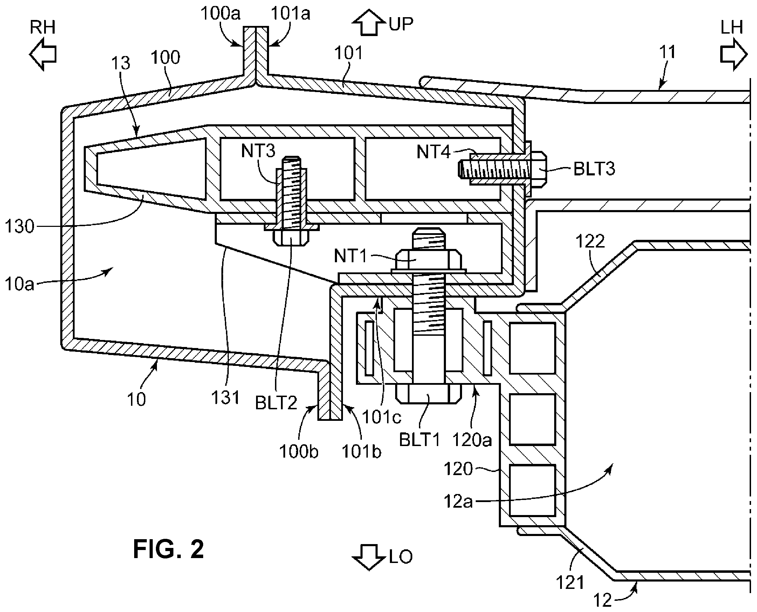

A fixation structure of the side sill **10,** the cross member **11,** and the battery **12** will be described referring to FIGS. **2** through **4****.** While FIG. **2** illustrates the right-side side sill **10** and its surrounding structure only, the left-side side sill **1**0 and its surrounding structure are substantially the same as those of the right-side side sill **10.** These both are laterally symmetrical.

As shown in FIG. **2****,** the side sill **10** comprises a closed-cross section having a hollow portion **10a** inside. Specifically, the side sill **10** is formed by fixing respective upper flange portions **100a, 101a** and respective lower flange portions **100b, 101b** of a side sill outer **100** and a side sill inner **101** which have a hat-shaped cross section, respectively.

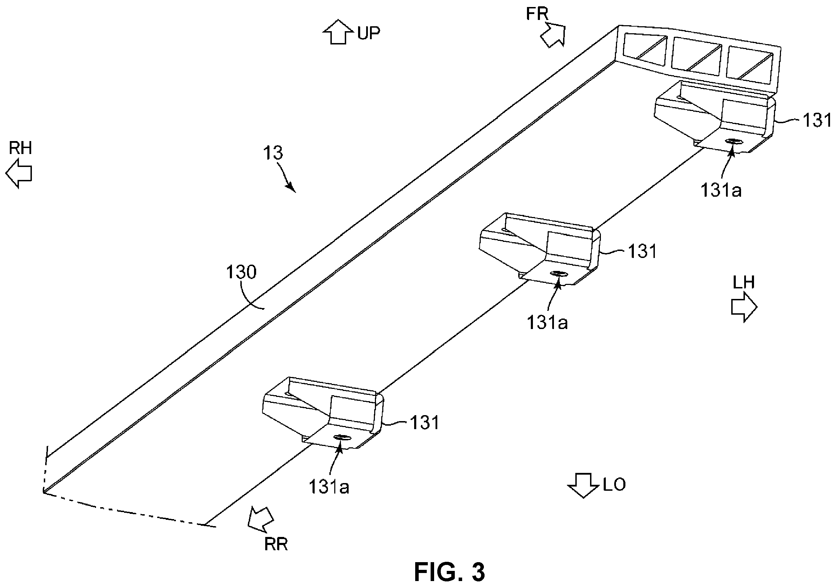

A reinforcing member **13** is stored in the hollow portion **10a.** The reinforcing member **13** comprises a body portion **130** having a closed-cross section and brackets **131** arranged below the body portion **130.** As shown in FIGS. **2** and **3****,** the body portion **130** of the reinforcing member **13** extends in the longitudinal direction along the side sill **10.** Meanwhile, the plural brackets **131** are provided to be separated from each other in the longitudinal direction. The brackets **131** are fixed to an inward side, in the vehicle width direction, of a lower face of the body portion **130.**

The body portion **130** and the bracket **131** are fixed together by a nut (blind nut) **NT3** which is inserted into a penetration hole formed at the body portion **130** and a bolt **BLT2** which is inserted into the nut **NT3** from the side of the bracket **131** and screwed into the nut **NT3.** Herein, an outer diameter of the nut **NT3** is enlarged inside the body portion **130** by screwing of the bolt **BLT2** into the nut **NT3,** specific illustration of which is omitted here in FIG. **2****,** so that both the nut **NT3** and the bolt **BLT2** are prevented from being detached (dropped off) easily.

Herein, the fixation of the body portion **130** and the bracket **131** may be attained by providing a boss with a female screw at the body portion **130** and then screwing the bolt **BLT2** into this female screw of the boss.

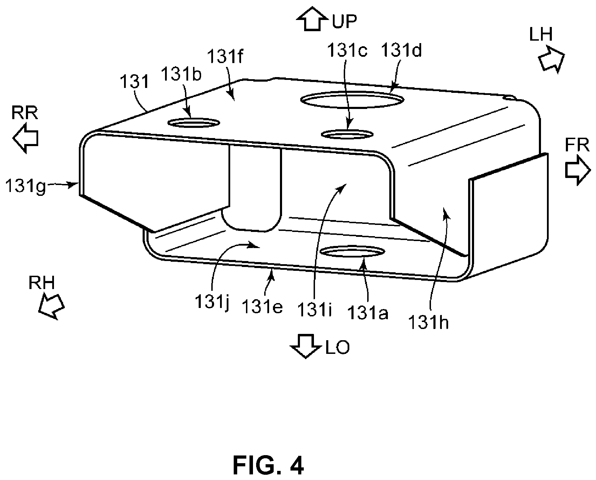

As shown in FIG. **4****,** each of the plural brackets **131** has an opening **131j** at one side, in the vehicle width direction, thereof (the vehicle outward side in the present embodiment), and walls **131e** - **131i** are formed at the other portion. The bracket **131** is configured such that the bottom wall **131e** and the ceiling wall **131f** face each other in the vertical direction and the side walls **131g, 131h** face each other in the longitudinal direction. A penetration hole **131a** is formed at the bottom wall **131e,** and penetration holes **131b** - **131d** are formed at the ceiling wall **131f.** The penetration holes **131b, 131c** are holes where the nut **NT3** and the bolt **BLT2** are inserted. The penetration hole **131a** is a hole where a bolt **BLT1** used for fixing the battery **12** is inserted, and the penetration hole **131d** is a hole (service hole) which is used in the operation (work) of screwing the nut **NT1** onto the bolt **BLT1.**

In the present embodiment, the body portion **130** of the reinforcing member **13** is fixed to the side sill inner **101.** The fixation of the body portion **130** and the side sill inner 101 is attained by inserting a nut (blind nut) **NT4** into penetration holes which are formed at the body portion **130** and the side sill inner **101** and screwing a bolt **BLT3** which is inserted from the vehicle inward side of the side sill inner **101** into the nut **NT4.** Likewise, an outer diameter of the nut **NT4** is enlarged inside the body portion **130** by screwing of the bolt **BLT3** into the nut **NT4,** specific illustration of which is omitted here in FIG. 2, so that both the nut **NT4** and the bolt **BLT3** are prevented from being detached (dropped off) easily.

Herein, the fixation of the body portion **130** and the side sill inner **101** may be attained by providing a boss with a female screw at the body portion **130** and then screwing the bolt **BLT3** into this female screw of the boss.

The cross member **11** extends in the vehicle width direction and is fixed to the side sills **10** at its both ends. A fixation manner of the cross member **111** to the side sill **10** can adopt various ways, such as bolt fastening or welding.

Herein, when the reinforcing member **13** and the cross member **11** are viewed from one side of the vehicle width direction, the reinforcing member **13** and the cross member **11** are arranged such that they overlap each other. Specifically, the body portion **130** of the reinforcing member **13** is located at a position which overlaps the cross member **11** in the side view.

The battery **12** comprises a structural body including a battery frame **120** which is configured to enclose the circumference of a direction crossing the vertical direction, a bottom wall **121** which is fixed to a lower portion of the battery frame **120,** and a lid **122** which is fixed to an upper portion of the battery frame **120.** Battery cells (not illustrated) are stored in a cell storage portion **12a** which is enclosed by the battery frame **120,** the bottom wall **121,** and the lid **122.**

As shown in FIG. **2****,** the battery frame **120** has a closed-cross section and an extension portion **120a** extending to the outward side, in the vehicle with direction, of the vehicle body. The extension portion **120a** has a penetration hole where the bolt **BLT1** is inserted. The bolt **BLT1** penetrates through a penetration hole (not illustrated) formed at a lower wall portion **101c** of the side sill inner **101** and a penetration hole **131a** (see FIGS. **3** and **4**) of the bracket **13**1, and reaches inside the bracket **131** of the reinforcing member **13.** The bolt **BLT1** screws into the nut **NT1** which is provided at its penetration position inside the bracket **131.**

The bolt **BLT1** of the present embodiment has a bar-shaped shaft portion and corresponds to the fixation member.

In the present embodiment, the lower wall portion **101c** of the side sill inner **101** is fixed to the battery frame **120** by the bolt **BLT1** screwing into the nut **NT1** in a state where it is interposed between the bracket **131** of the reinforcing member **13** and the battery frame **120.** In other words, the battery frame **120** is fixed to both the side sill **10** and the reinforcing member **13.**

### 3. Move of Battery 12 When Side-Collion Load is Applied to Side Sill 10

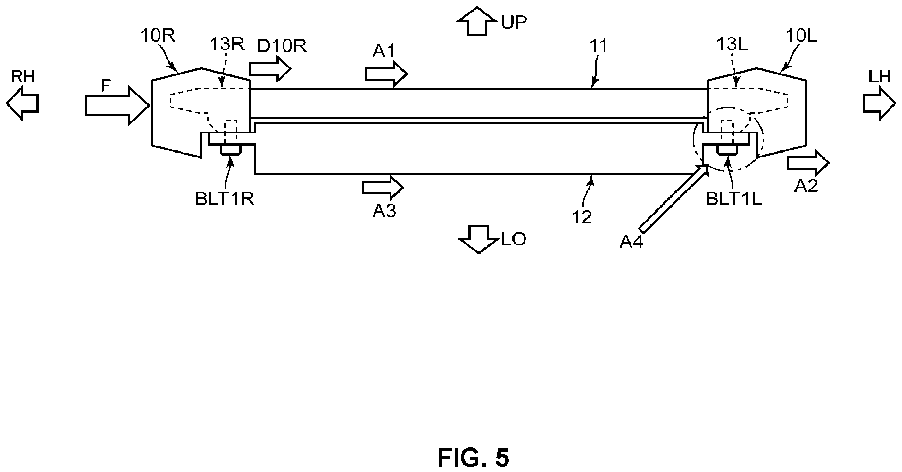

The move of the battery **12** when the side-collision load is applied to the side sill **10** will be described referring to FIG. **5****.** In the followings, a case where a side-collision load F is applied to a right-side side sill **10R** from the vehicle outward side will be described. Even in a case where the side-collision load **F** is applied to a left-side side sill **10L** from the vehicle outward, substantially the same move of the battery **12** happens.

As shown in FIG. **5****,** when the side-collision load **F** is applied to the right-side side sill **10R,** the right-side side sill **10R** moves to the left along with its deformation at an application point of the load **F** (an arrow **D10R**). A reinforcing member **13R** stored the inside moves to the left as well according to the leftward move of the side **sill 10R.** Thereby, the cross member **11** which is arranged in the overlapping area moves to the left (an arrow **A1**).

As described above, since the battery **12** is fixed to the side sill **10R** and a reinforcing member **12R** by a bolt **BLT1R,** the battery **12** moves to the left according to the moves of the side sill **10R** and the reinforcing member **13R** (an arrow **A3**). Thus, in the vehicle **1** of the present embodiment, when the side-collision load **F** is applied to the side sill **10R,** the battery **12** moves to the left together with the cross member **11** in a state where these two have a small relative move-difference. Accordingly, even if the left-side side sill **10L** and the reinforcing member **13L** have move/deformation as shown by an arrow **A2** due to the pressing of the cross member **11,** it is suppressed that a bolt **BLT1L** which fixes the battery **12** to the side sill **10L** and the reinforcing member **13L** gets broken (at a point shown by an arrow **A4**) and thereby the battery **12** gets detached from the side sill **10L.**

### 4. Effects

In the vehicle **1** provided with the lower structure according to the present embodiment, the body potion **130** having the closed-cross section of the reinforcing member **13** is arranged in the overlapping area with the cross member **11** in the side view, the side-collision load **F** applied to the side sill **10** from the vehicle outward side is efficiently transmitted to the cross member **11.** Further, even at the opposite side to the application side of the side-collision load **F,** since the reinforcing member **13** is arranged in the overlapping area with the cross member **11,** the side-collision load **F** transmitted via the cross member **11** is efficiently transmitted to the side sill **10** (the opposite-side side sill **10** to the to the application side of the side-collision load **F**).

In the vehicle **1,** the battery frame **120** is fixed not only to the side sill **10** but to the reinforcing member **13** by the bolt **BLT1.** Accordingly, even in a case where the side-collision load **F** is applied to the side sill **10** from the vehicle outward side, the battery frame **120** moves to the opposite side to the load-application side together with the cross member **11.** Thereby, in the vehicle **1,** even when the side-collision load **F** is applied to the one of the side sills **10** (the right-side side sill **10R** in the example shown in FIG. **5**), it can be suppressed that the fixation of the side sill **10** which is opposite to the application side of the side-collision load **F** (the left-side side **sill 10L** in the example shown in FIG. **5**) and the battery **12** is released.

Herein, the battery **12** installed below the floor in the electric vehicle or the like has the large capacity and the large size and therefore it is heavy. Therefore, the battery frame **120** is configured to have the high rigidity. Thereby, the battery frame **120** where the load is transmitted via the bolt **BLT1** may not be greatly deformed and broken compared to the cross member **11,** so that when the side-collision load **F** is applied to the side sill **10,** the relative move-difference between the cross member **11** and the battery frame **120** may not occur.

Further, in the vehicle **1** provided with the lower structure according to the present embodiment, the body portion **130** of the reinforcing member **13** has the closed-cross section and the bracket **131** of the reinforcing member **13** is fixed to the battery frame **120** by the bolt **BLT1,** the rigidity of the reinforcing member when the side-collision load **F** is applied to the side sill **10** is kept high, and also the fixation of the battery frame **120** and the reinforcing member **13** is made secure.

Further, in the vehicle **1** provided with the lower structure according to the present embodiment, the side sill **10,** the reinforcing member **13,** and the battery frame **120** are fixed together by the bolt **BLT1** in the state where the lower wall portion **101c** of the side sill **10** is interposed between the bracket **131** of the reinforcing member **13** and the battery frame **120.** Accordingly, the battery frame **120** can be firmly fixed to the side sill **10** and the reinforcing member **13.** That is, compared to a case where the lower wall portion **101c** of the side sill **10** is fixed in a state where a gap is generated between the bracket **131** of the reinforcing member **13** or the battery frame **120,** when the side-collision load **F** is applied to the side sill **10** from the vehicle outward side, the cross member **11** and the battery frame **120** do not have move difference easily due to resistance caused by a face contact of the both. Accordingly, even when the side-collision load **F** is applied to the one of the side sills **10** (the right-side side **sill 10R** of the example shown in FIG. **5**), it can be further suppressed that the fixation of the other side sill **10** opposite to the load-application side (the left-side side sill **10L** of the example in FIG. **5**) and the battery **12** is released.

Also, in the vehicle **1** provided with the lower structure according to the present embodiment, since the body portion **130** including the part of the reinforcing member **13** having the closed-cross section is fixed to the side sill **10** by the bolt **BLT3,** the body portion **130** of the reinforcing member **13** moves toward the vehicle inward side together with the side sill **10** when the side-collision load **F** is applied to the side sill **10.** Thereby, the load transmission to the cross member **11** is conducted by the body portion **130** of the reinforcing member **13** moving together with the side sill **10,** and the load is properly transmitted to the battery frame **120** via the bolt **BLT1.**

Moreover, in the vehicle **1** provided with the lower structure according to the present embodiment, the bracket **131** is fixed to the body portion **130** of the reinforcing member **13** by the bolt **BLT2,** when the side-collision load **F** is applied to the side sill **10,** the relative move-difference, vehicle width direction, between the body portion **130** and the bracket **131** does not occur easily. Thereby, even when the side-collision load **F** is applied to the one of the side sills **10** (the right-side side **sill 10R** of the example shown in FIG. **5**), it can be further effectively suppressed that the fixation of the other side sill **10** opposite to the load-application side (the left-side side sill **10L** of the example shown in FIG. **5**) and the battery **12** is released.

Further, in the vehicle **1** provided with the lower structure according to the present embodiment, since the battery frame **120** have the closed-cross section as well, it is suppressed that the battery frame **120** is greatly deformed when the side-collision load **F** is applied to the side sill **10.** Thereby, even when the side-collision load **F** is applied to the one of the side sills **10** (the right-side side sill **10R** of the example shown in FIG. **5**), it can be further effectively suppressed that the fixation of the other side sill **10** opposite to the load-application side (the left-side side sill **10L** of the example shown in FIG. **5**) and the battery **12** is released.

Also, in the vehicle **1** provided with the lower structure according to the present embodiment, since the bolt **BLT1** is provided to extend in the vertical direction, the battery **12** is raised upward from a lower position and then the battery frame **120** can be fixed to the side sill **10** and the reinforcing member **13.** That is, any troublesome operations for installing the battery **21** are unnecessary.

Moreover, when the side-collision load **F** is applied to the side sill **10,** the load can be transmitted to the battery frame **120** via the bolt **BML1** extending in the vertical direction.

Further, in the vehicle **1** provided with the lower structure according to the present embodiment, since the battery frame **120** and the reinforcing member **13** are fixed to the side sill inner **101,** even when the side-collision load **F** is applied to the part, in the longitudinal direction, of the side sill **10,** it can be suppressed that a joint point (by welding or the like) of the side sill inner **101** and the vehicle body, such as a floor panel, is released. That is, the side sill **10** tends to be deformed in a bent shape in the plan view when the side-collision load **F** is applied to the side sill **10.** However, since the side sill **10** and the reinforcing member **13** are fixed to the battery frame **120** having the high rigidity, it can be suppressed that the side sill **10** is deformed in the bent shape by a reaction force from the battery frame **120.** Accordingly, releasing of the joint point of the side sill **10** and the vehicle body due to the application of the side-collision load **F** to the part of the side sill **10** can be suppressed properly.

As described above, in the vehicle **1** provided with the lower structure according to the present embodiment, even when the side-collision load is applied to the side sill from the vehicle outward side, it can be properly suppressed that the fixation of the side sill and the battery is released.

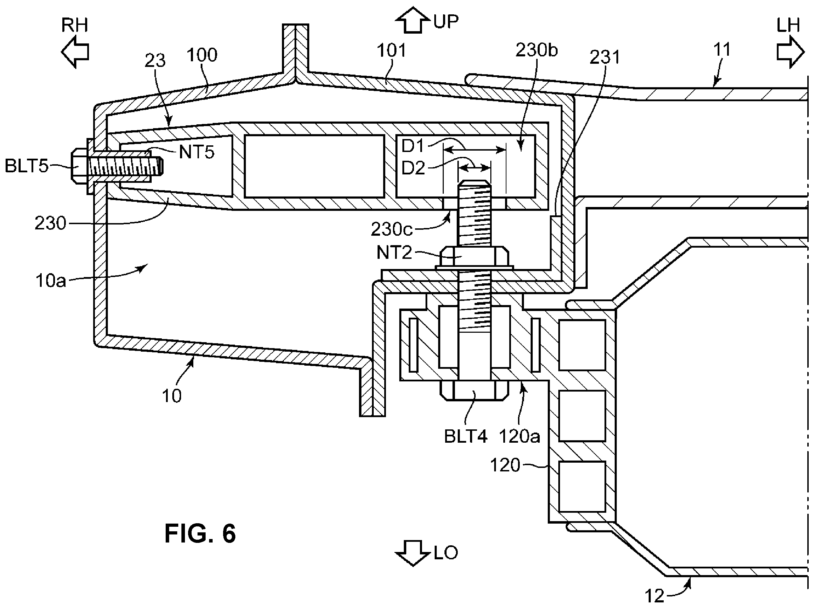

A modification can be described as follows:
A lower structure according to a first modification will be described referring to FIG. **6****.** In the present modification, a structure of a reinforcing member **23** is different from the above-described embodiment, and the other structure is the same as the above-described embodiment. Hereafter, the structure of the reinforcing member **23** will be described.

As shown in FIG. **6****,** the reinforcing member **23** comprises a body portion **230** which includes part thereof having the closed-cross section and a bracket **231** which is fixed to the battery frame **120.** In the reinforcing member **23** of the present modification, the body portion **230** and the bracket **231** are separated from each other, not being fixed together.

The body portion **230** of the reinforcing member **23** is, similarly to the above-described embodiment, arranged inside the hollow portion **10a** of the side sill **10** in an overlapping area, in the side view, with the cross member **11.** The body portion **230** is fixed to the side sill outer **100.** The fixation of the body portion **230** and the side sill outer **100** is attained by a structure in which a nut (blind nut) **NT5** is inserted into penetration holes formed at the body portion **230** and the side sill outer **100** and a bolt **BLT5** inserted from the vehicle outward side of the side sill outer **100** screws into the nut **NT5.** Likewise, the outer diameter of the nut **NT5** is enlarged inside the body portion **130** by the bolt **BLT5** screwing into a female screw of the nut **NT5,** so that the nut **NT5** and the bolt **BLT5** are prevented from being detached.

Herein, the fixation of the body portion **130** and the side sill outer **100** may be conducted by a structure in which a boss with female screw is provided at the body portion **130** and the bolt **BLT5** screws into the female screw of the boss.

The battery frame **120** of the present modification has the closed-cross section and an extension portion **120a** extending in the vehicle-outward direction as well. The extension portion **120a** has a penetration hole where a bolt **BLT4** is inserted, and the bolt **BLT4** passes through a penetration hole formed at the lower wall portion of the side sill inner **101** and a penetration hole of the bracket **231** and partially reaches an inside of a hollow portion **230b** of the body portion **230.** The nut **NT1** screws onto the bolt **BLT4** on the bracket **231,** whereby the battery frame **120,** the side sill **10,** and the bracket **231** are fixed together.

The body portion **230** of the reinforcing member **23** has an opening **230c** where a tip of the bolt **BLT4** penetrates. An opening diameter (opening size) **D1** of the opening **230c** is set to be larger than a diameter (section size) **D2** of a shaft portion (penetrating part) of the bolt **BLT4.** Herein, when the side-collision load is not applied to the side sill **10,** there exists a gap between an outer peripheral face of a shaft portion of the bolt **BLT4** and an inner peripheral face of the opening **230c.**

In the present modification, the body portion **230** of the reinforcing member **23** is not fixed to the battery frame **120.**

Herein, the bracket **231** is not indispensable for the reinforcing member **23.** That is, that is unnecessary as long as part of the bolt **BLT4** which is fixed to the side sill inner **101** by screwing into the nut **NT2** passes through the opening **230c** and reaches the inside of the body portion **230.**

The vehicle provided with the lower structure according to the present modification can perform the same effects as the above-described embo0diment. Further, in the present modification, the opening **230c** with a opening diameter **D1** is formed at the body portion **230** of the reinforcing member **23,** and the shaft portion of the bolt **BLT4** passes through the opening **230c** and reaches the inside thereof. That is, in a case where the side-collision load is applied to the side sill **10,** the shaft portion of the bolt **BLT4** and the inner peripheral face of the opening **230c** of the body portion **230** do not contact each other, so that any noises caused by the contacting can be suppressed. Meanwhile, in a case where the side-collision load is applied to the side sill **10** and the reinforcing member **23** moves to the vehicle inward side according to the deformation or move of the side sill **10,** the shaft portion of the bolt **BLT4** and the inner peripheral face of the opening **230c** contact each other. Thereby, part of the side-collision load applied to the side sill **10** is transmitted to the battery frame **120** via the bolt **BLT4** as well, so that the battery frame **120** can be made to move together with the cross member **11** in the vehicle side collision.

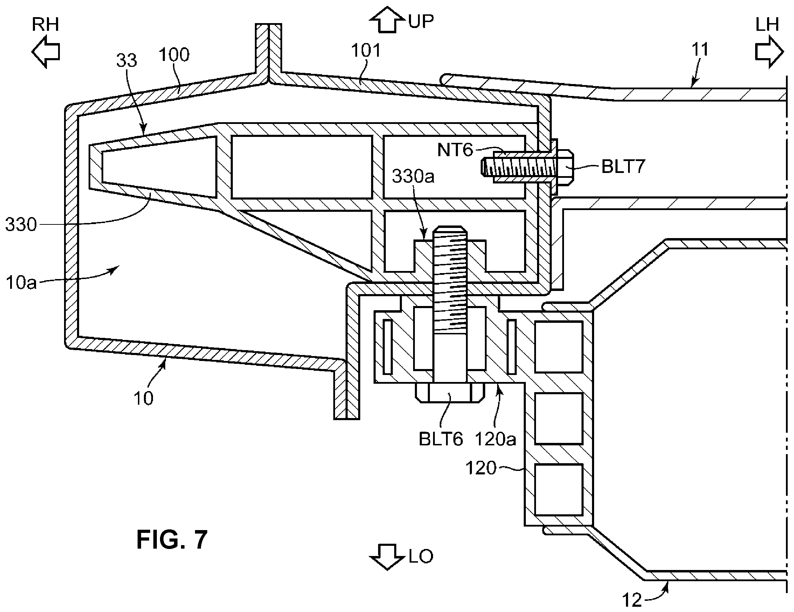

A further modification can be described as follows:
A lower structure according to a second modification will be described referring to FIG. **7****.** In the present modification, a structure of a reinforcing member **33** is different from the above-described embodiment, and the other structure is the same as the above-described embodiment. Hereafter, the structure of the reinforcing member **33** will be described.

As shown in FIG. **7****,** the reinforcing member **33** is constituted by a body portion **330** which including part thereof having the closed-cross section. That is, the reinforcing member **33** of this modification does not comprise any bracket like the brackets **131, 231** of the above-described embodiments and the first modification, and the battery frame **120** is fixed to the body portion **330** directly in the second modification.

A bolt **BLT6** which penetrates the extension portion **120a** of the battery frame **120** is configured such that its shaft portion penetrates the body portion **330** of the reinforcing member **33.** A boss **330a** with a female screw is formed at a penetration portion of the bolt **BLT6** at the body portion **330.** The bolt **BLT6** screws into the female screw formed at the boss **330a,** whereby the battery frame **120** is fixed to the side sill **10** and the reinforcing member **33.**

Herein, in the fixation of the battery frame **120** and the body portion **330** of the reinforcing member **33,** it is not indispensable that the bolt **BLT6** screws into the female screw formed at the boss **330a.** For example, a nut may be arranged inside the body portion **330,** and the battery frame **120** and the reinforcing member **33** may be fixed by making the bolt **BLT6** into this nut.

In this modification, the reinforcing member **33** is fixed to the side sill inner **101.** The fixation of the reinforcing member **33** and the side sill inner **101** is attained by a structure in which a nut (blind nut) **NT6** is inserted into penetration holes formed at the body portion **330** and the side sill inner **101** and a bolt **BLT7** inserted from the vehicle inward side of the side sill inner **101** screws into the nut **NT6.** The outer diameter of the nut **NT6** is enlarged inside the body portion **130** by the bolt **BLT6** screwing into a female screw of the nut **NT6,** so that the nut **NT6** and the bolt **BLT7** are prevented from being detached.

Herein, the fixation of the body portion **130** and the side sill inner **101** may be conducted by a structure in which a boss with female screw is provided at the body portion **130** and the bolt **BLT7** screws into the female screw of the boss.

While the lower structure according to this modification is different from the above-described embodiments because no bracket is provided at the reinforcing member **33,** the other structure is the same and the same effects are performed by this modification.

In the following other modifications are addressed:
While the bolts **BLT1, BLT4, BLT6** are used as the fixing member in the above-described embodiment and the first and second modifications, any fixing member, such as a rivet, is applicable in the present invention.

Further, while the body portions **130, 330** of the reinforcing members **13, 33** are fixed to the side sill inner **101** in the above-described embodiment and second modification and the body portion **230** of the reinforcing member **23** is fixed to the side sill outer **10** in the above-described first modification, any fixation is applicable in the present invention as long as the body portion of the reinforcing member is fixed to at least one of the side sill outer and the side sill inner.

## Claims

1. A lower structure of a vehicle (1), comprising:
a pair of side sills (10) arranged at both outward sides, in a vehicle width direction, of a floor (1b) of the vehicle (1), extending in a longitudinal direction of the vehicle, and having a closed-cross section with a hollow portion (10a) inside, respectively;
a cross member (11) extending in the vehicle width direction and fixed to the pair of side sills (10) at both ends thereof;
a battery (12) arranged below the cross member (11) under the floor (1b) of the vehicle and having a battery frame (120) extending in the longitudinal direction of the vehicle on an inward side, in the vehicle width direction, of each of the pair of side sills (10);
a reinforcing member (13) stored in the hollow portion (10a) of each of the pair of side sills (10), the reinforcing member (13) being configured such that at least part thereof has a closed-cross section and the part thereof having the closed-cross section is arranged in an area which overlaps the cross member (11) in a side view of the vehicle, when viewed from one side of the vehicle width direction; and
a fixing member (BLT1) to fix the battery frame (120) of the battery (12) to each of the pair of side sills (10),
wherein said fixing member (BLT1) is configured such that part thereof penetrates said reinforcing member (13) and the fixing member (BLT1) fixes said battery frame (120) to said side sill (10) together with the reinforcing member (13).

2. The lower structure of the vehicle of claim 1, wherein said reinforcing member (13) comprises a body portion (130) including said part of the reinforcing member having the closed-cross section and a bracket (131) arranged below said body portion (130), and said fixing member (BLT1) is configured such that part thereof penetrates said bracket (131) and the fixing member (BLT1) fixes the bracket (131) to said battery frame (120).

3. The lower structure of the vehicle of claim 2, wherein said fixing member (BLT1) is configured such that part thereof penetrates said body portion (130).

4. The lower structure of the vehicle of claim 3, wherein a portion of said fixing member (BLT1) which penetrates said body portion (130) has a bar shape, and a portion of said body portion (130) of the reinforcing member (13) where said part of the fixing member penetrates has an opening (230c) with a size which is larger than a sectional size of said bar-shaped portion of the fixing member.

5. The lower structure of the vehicle of claims 2-4, wherein said side sill (10) is fixed to said battery frame (120) in a state where part of an outer wall (101c) of the side sill (10) is interposed between said bracket (131) and said battery frame (120).

6. The lower structure of the vehicle of claims 2-5, wherein said body portion (130) of the reinforcing member (13) is fixed to said side sill (10) at least one of an inward side and an outward side, in the vehicle width direction, thereof.

7. The lower structure of the vehicle of claims 2-6, wherein said bracket (131) is fixed to said body portion (130) of the reinforcing member (13).

8. The lower structure of the vehicle of claims 1-7, wherein at least part of said battery frame (120) has a closed-cross section, and said fixing member (BLT1) fixes said part of the battery frame (120) having the closed-cross section to said side sill (10) and said reinforcing member (13).

9. The lower structure of the vehicle of claims 1-8, wherein said fixing member (BLT1) is provided to extend upward, in a vertical direction, of the vehicle toward said reinforcing member (13) from said part of the battery frame (120) having the closed-cross section.

10. The lower structure of the vehicle of claims 1-9, wherein each of said pair of side sills (10) comprises a side sill outer (100) provided on the outward side, in the vehicle width direction, thereof and a side sill inner (101) provided on the inward side, in the vehicle width direction, thereof and fixed to said side sill outer (100), and said battery frame (120) and said reinforcing member (13) are fixed to said side sill inner (101) by said fixing member (BLT1).

11. The lower structure of the vehicle of claims 1-10, wherein said reinforcing member (13) is fastened to said side sill (10) in the vehicle width direction.

12. A vehicle comprising a lower structure of any of the claims 1-11.
